Europäisches Patentamt

European Patent Office

Office européen des brevets

(19)

(11) Publication number: **0 155 118**
A2

## EUROPEAN PATENT APPLICATION

(21) Application number: 85301337.3

(22) Date of filing: 27.02.85

(51) Int. Cl.⁴: **F 24 F 13/14**

(30) Priority: 28.02.84 DK 1187/84

(43) Date of publication of application: 18.09.85
Bulletin 85/38

(84) Designated Contracting States: DE FR GB NL SE

(71) Applicant: NORDISK VENTILATOR CO. A/S,
No. 21 Industrivej, DK-4700 Naestved (DK)

(72) Inventor: Jakobsen, Jorgen, No. 1, Skolevej,
DK-5540 Ullerslev (DK)

(74) Representative: Westwood, Edgar Bruce et al,
STEVENS, HEWLETT & PERKINS 5, Quality Court
Chancery Lane, London WC2A 1HZ (GB)

(54) Wall-mounted valve device, especially for the ventilation of stables.

(57) In a wall valve to be mounted in the outer wall of a building a damper member mounted in a duct member (1) formed in the wall comprises a bent primary flap (2) having a portion (5) which in the closed position of the valve and during beginning opening extends horizontally into the room (12). When opening beyond a first position the «bend» (9) of the primary flap is turned into the room, whereby another portion (4) directed obliquely upwards will act as guide surface.

A secondary flap (6) controlled by the pivotal movement of the primary flap (2) has the form of a cylindrical surface and is suspended so in the duct member (1) that in its closed position it is kept in abutment on the duct member and is only liberated to rotate in the opposite direction of the primary flap (2) and thus to allow passage of air therebelow when the primary flap (2) due to increasing need for ventilation has been further opened beyond another position.

Wall-mounted valve device, especially for the ventila-
tion of stables.

The invention relates to a wall-mounted valve
device, for arrangement in the outer wall of a building,
in particular for use in the sub-pressure ventilation of
stables and similar rooms, said valve device comprising
a duct member adapted for mounting in the wall and
having a flow passage of a substantially rectangular
cross-section and a damper member disposed in or at the
duct member, said damper member having at least one flap
suspended for pivotal movement with respect to a horizontal axis between a closing position and a fully open
position, a bent part of said flap projecting into the
ventilated room to function as a guide surface.

In addition to a simple volume control of the
injected air, the object of valve devices of this kind
is to control the direction of the air inflow so that
the ventilation is carried out without inconveniences to
the animals in the stable.

The need for ventilation and the direction of the
injected air depend on the outdoor air temperature. At
lower outdoor temperatures there is only a modest need
for ventilation, but then the cool inflowing air must
not be injected directly down into the dwelling zone for
the animals without being mixed with the warmer indoor
air, i.e. the supplied air should be injected above the
dwelling zone. At rising outdoor temperature implying an
increased need for ventilation in the form of fresh air
injection directly to the dwelling zone the appropriate
direction of injection  changes downwards to a direction
towards the animals.

From German Utility Model No. 7508345, a valve of
the kind concerned is known, having one weight-loaded
flap which at its end projecting into the ventilated
room have two guide surfaces bent upwardly and downwardly, respectively, in relation to the flap. The valve functions automaticly since only the pressure difference between the ventilated room and the open air, i.e. a sub-pressure in the stable and/or the wind pressure, determines the degree of opening of the valve. With a view to different situations of injection, the valve is provided at its inlet opening with a stationary obstruction plate allowing air passage beneath the flap, and thus down towards the animals only after a certain opening of the flap. As the pressure difference varies independently of the outdoor air temperature the flap will show a tendency to unstable corresponding oscillation. Thus, also at a low outdoor temperature a considerable sub-pressure may cause the flap to open so much that cool air flows directly towards the animals. Moreover, the stationary obstruction plate implies a decrease of the total cross-sectional air passage area and consequently a reduction of the effeciency of the valve.

Another known valve of similar function includes a duct member being curved upwardly at the inner surface of the building and comprising two injection openings which by means of two mechanically connected damper plates permit air injection upwardly and substantially horizontally, respectively, as well as combinations hereof. The valve is rather complicated and does not allow for a decided downwardly directed air injection.

The object of the invention is to provide a valve device of a simple structure easy to operate which valve does not suffer from the above mentioned drawbacks and can easily be adjusted to control the quantity and direction of the injected air.

This is obtained according to the invention in that the said flap is formed as a primary flap controlled by means of a control device and having its pivot axis extending substantially through the middle of one portion of the primary flap suspended in the duct member, the distance of the pivot axis from the internal outlet of the duct member, the height of said one portion of the primary flap and the bending angle of the primary flap being dimensioned so that the bend of the primary flap in the closing position and at the beginning of the opening is located in the duct member behind its internal outlet with the other portion of the primary flap projecting into the ventilated room extending substantially horizontally, whereas upon opening of the primary flap beyond a first predetermined, limited height of the air passage slot above the primary flap said bend is turned into the ventilated room, the damper member moreover comprising a secondary flap controlled by the pivotal movement of the primary flap and suspended pivotally about an axis parallel to the axis of the primary flap, said secondary flap having a curved form corresponding to the circular movement described by the underedge of the primary flap, the underedge of said secondary flap being kept in abutment against the lower surface of the duct member by the underedge of the primary flap in the closing position and during opening of the primary flap, and being turned in the opposite direction of the primary flap to allow injection of air therebeneath only when opening the primary flap beyond another, predetermined height of the air passage slot.

In the following an embodiment of the invention will be explained in detail with reference to the accompanying drawings, in which

Fig. 1 is a sectional view of the valve device in its closed position,

Fig. 2 a sectional view as in Fig. 1, the primary flap having just begun to open,

Fig. 3 a sectional view as in Fig. 1, the primary flap being further opened,

Fig. 4 a corresponding sectional view, the secondary flap having just begun to open, and

fig. 5 a sectional view through the valve device in its fully open position.

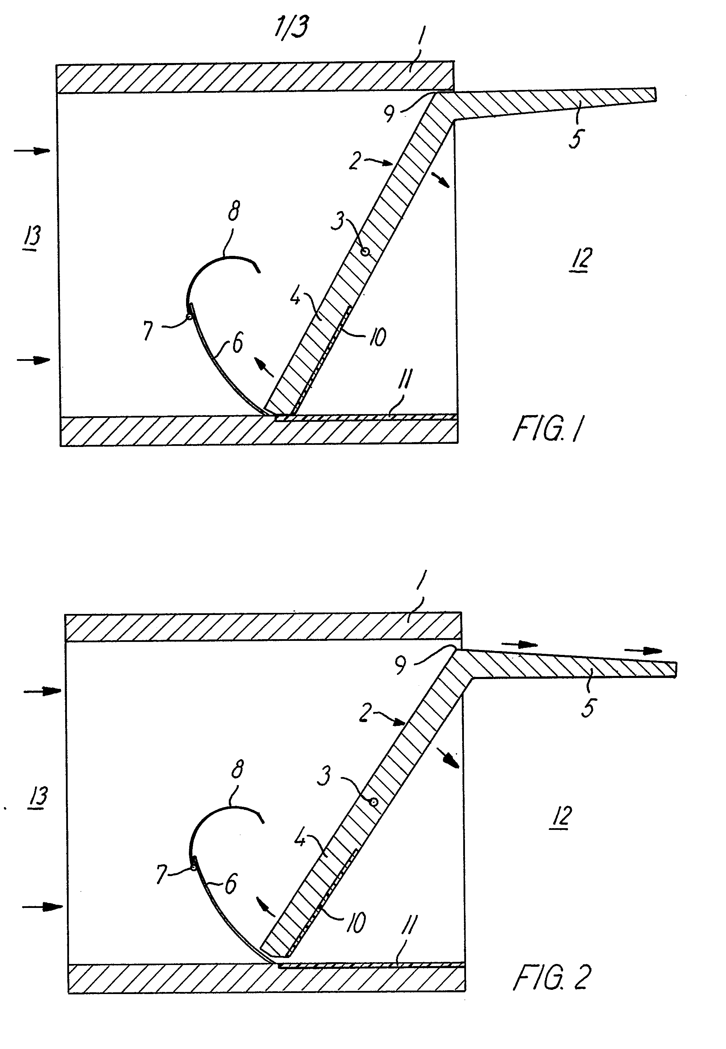

Fig. 1 illustrates a duct member 1 in which a primary flap 2 is pivotally suspended about an axis 3. The primary flap 2 consists of a first portion 4 and a second portion 5. Along an edge 9 the portions 4 and 5 are bent so in relation to each other that the second portion 5 in the closed position of the valve projects substantially horizontally into the room 12 to be ventilated. In this position the edge 9 abuts internally on the top of the duct member 1 within its interior outlet.

In front of the primary flap 2, i.e. on the side thereof facing the open air a secondary flap 6 is journalled about an axis 7, the cross-section of said flap 6 having the form of a part of a circular arc having a radius corresponding to the distance of the lower end of the primary flap 2 from its pivot axis 3. In the closed position of the valve and until the primary flap has reached a certain predetermined opening degree the secondary flap 6 occupies the position shown in Fig. 1, i.e. with its underedge in abutment on the bottom of the duct member.

Figs 2 to 5 illustrate the mode of operation of the valve device. At minimum need for ventilation the valve is only opened a little as shown in Fig. 2. As long as the edge 9 is situated within the internal outlet of the duct member 1 the direction of air injection is determined by the bent second portion 5 of the primary flap 2 extending into the room 12. In this position which is preferably used at outdoor temperatures below 0°C and consequent minimum need for ventilation, the small quantity of air is thus directed substantially horizontally above the dwelling zone of the animals and is mixed with warmer indoor air before it reaches the animals. The length of the second portion 5 determines in this situation the length of injection of the air into the room and this length can therefore be adapted to actual circumstances. The secondary flap 6 is kept closed by the lower end of the primary flap so as to prevent air from passing beneath the primary flap.

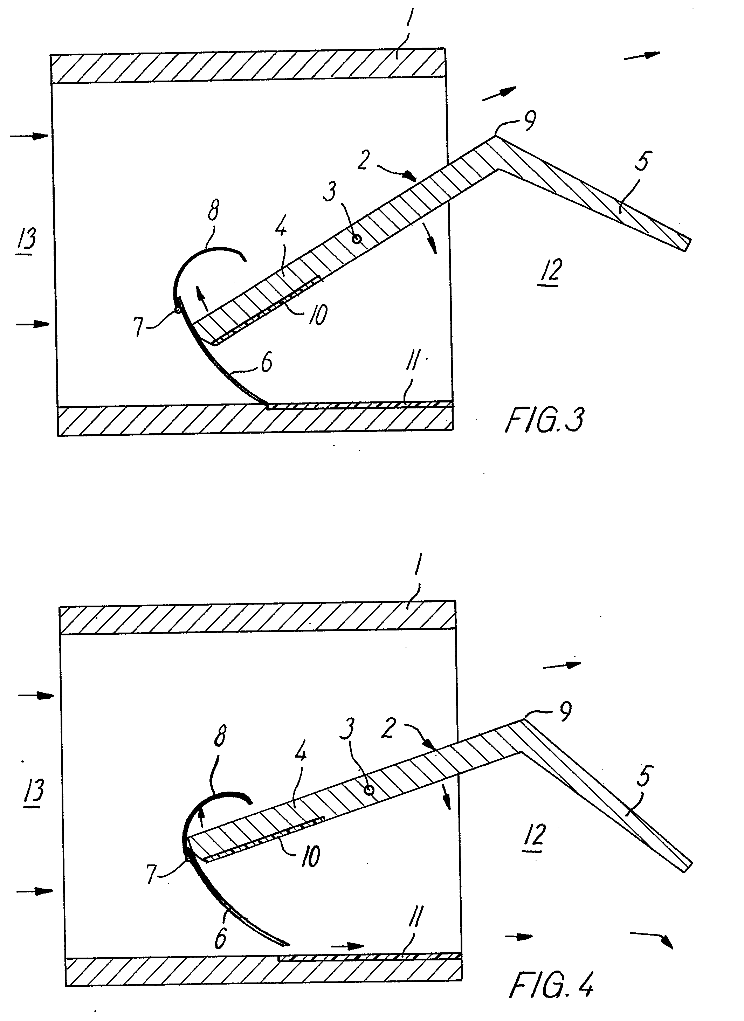

At increasing need for ventilation the primary flap is further opened, for instance to the position shown in Fig. 3 which is used e.g. at low outdoor temperatures between 0 and 10°C. As the edge 9 is thereby pivoted outside the internal outlet of the duct member 1 it is now the first portion 4 of the primary flap 2 that controls the direction of injection, which as shown in Fig. 3 is directed obliquely upwards entailing that the greater but still cooler amount of air as previously is mixed with the indoor air before it reaches the animals. The secondary flap 6 continuously shuts off the air passage beneath the primary flap 2.

Concurrently with increasing need for ventilation the primary flap is further opened which implies that the sectional air flow area increases and the direction of injection changes in the direction downwards to the animals.

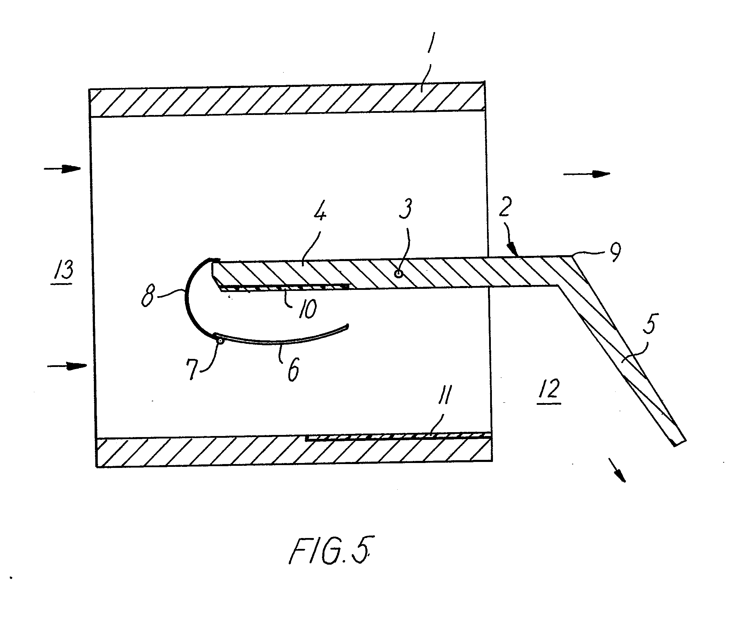

When the degree of opening of the primary flap 2 reaches another predetermined limit the secondary flap 6 begins opening as shown in Fig. 4. This opening is effected compulsorily in that the underedge of the primary flap 2 passes the pivot axis 7 of the secondary flap 6 and presses against guides 8 which - for instance in the form of curved spring straps - are secured to the secondary flap 6. The secondary flap rotates then in the opposite direction of the primary flap and admits air to pass therebelow. In this situation, i.e. at outdoor temperatures between e.g. 5 and 15°C, the need for ventilation is so great that air can be injected more directly towards the animals, the main flow of air being, however, still injected substantially horizontally into the room by the first portion 4 of the primary flap 2.

In the situation illustrated in Fig. 5 maximum ventilation is effected. The air is injected in two main directions; i.e. horizontally into the room, on one hand, and directly towards the animals on the other hand. The first portion 4 of the primary flap 2 extends substantially horizontally and the other portion 5 acts again as guide surface. The secondary flap extends likewise mainly horizontally so as to liberate the greatest possible effective cross-sectional air flow area in the valve.

The duct member 1 as well as the primary flap 2 and the secondary flap 6 may be made from a heat insulating material.

In winter there is the risk that the operation of the valve is impeded or completely prevented due to condensed water freezing to ice in the transition between the underedge of the primary flap 2 and the bottom of the duct member 1. With a view to ensure the working without problems of the valve also under these circumstances, linings 10 and 11 of heat insulating material can be provided on the lowermost portion of the underside of the primary flap 2 close to its underedge and in area of the bottom of the duct member 1 between its internal outlet and the abutment line for the secondary flap.

PATENT CLAIMS

1. A wall-mounted valve device for arrangement in the outer wall of a building, in particular for use in the sub-pressure ventilation of stables and similar rooms, said valve device comprising a duct member adapted for mounting in the wall and having a flow passage of substantially rectangular cross-section and a damper member disposed in or at the duct member, said damper member having at least one flap suspended for pivotal movement with respect to horizontal axis between a closing position and a fully open position, a bent part of said flap projecting into the ventilated room to function as guide surface, <u>characterized</u> in that the said flap is formed as a primary flap (2) controlled by means of a control device and having its pivot axis (3) extending substantially through the middle of one portion (4) of the primary flap suspended in the duct member (1), the distance of the pivot axis from the internal outlet of the duct member, the height of said one portion (4) of the primary flap and the bending angle of the primary flap being dimensioned so that the bend (9) of the primary flap in the closing position and at the beginning of the opening is located in the duct member (1) behind its internal outlet with the other portion (5) of the primary flap (2) projecting into the ventilated room (12) extending substantially horizontally, whereas upon opening of the primary flap (2) beyond a first predetermined, limited height of the air passage slot above the primary flap said bend (9) is turned into the ventilated room (12), the damper member moreover comprising a secondary flap (6) controlled by the pivoted movement of the primary flap (2) and suspended pivotally about an axis (7) parallel to the axis (3) of the primary flap, said secondary flap having

/...

a curved form corresponding to the circular movement described by the underedge of the primary flap, the underedge of said secondary flap (6) being kept in abutment against the lower surface of the duct member (1) by the underedge of the primary flap, in the closing position and during opening of the primary flap (2) and being turned in the opposite direction of the primary flap to allow injection of air therebeneath only when opening the primary flap beyond another, predetermined height of the air passage slot.

2. A valve device as claimed in claim 1, characterized in that the pivot axis (7) of the secondary flap (6) is located lower than the pivot axis (3) of the primary flap (2) and at the top edge of the secondary flap and that the secondary flap comprises at least one guide member (8) projecting from the top edge of said secondary flap and being influenced by the primary flap in order to pivot the secondary flap (6) compulsorily when the primary flap has passed said other, predetermined position.

3. A valve device as claimed in claim 1 or 2, characterized in that at least the duct member (1) and the primary flap (2) are made from a heat insulating material, and that linings (10,11) of heat insulating material are provided on the underside of said one portion (4) of the primary flap in an area at the underedge and at the top surface of the lower wall of the duct member (1) in a region between the abutment line of the secondary flap (6) in the closed position and the internal outlet of the duct member.

0155118

1/3

FIG. 1

FIG. 2

*FIG.3*

*FIG.4*

FIG.5